# EUROPÄISCHE PATENTSCHRIFT

(11) **EP 4 284 691 B1**
(45) Veröffentlichungstag und Bekanntmachung des Hinweises auf die Patenterteilung: **16.10.2024**
(21) Anmeldenummer: 23716855.4
(22) Anmeldetag: 03.04.2023
(51) Int. Cl.: B60W 30/182, B60W 50/08, B60W 60/00, B60W 50/00

(54) **FAHRZEUG UND VERFAHREN ZUR AUSGABE VON EMPFEHLUNGEN AN EINE FAHRZEUGFÜHRENDE PERSON ZUR ÜBERNAHME EINER FAHRZEUGSTEUERUNG**
VEHICLE AND METHOD FOR OUTPUTTING RECOMMENDATIONS TO A PERSON DRIVING THE VEHICLE TO TAKE OVER VEHICLE CONTROL
VÉHICULE ET PROCÉDÉ DE FOURNITURE DE RECOMMANDATIONS À UNE PERSONNE CONDUISANT LE VÉHICULE POUR LA PRISE DE CONTRÔLE DU VÉHICULE

(30) Priorität: 22.04.2022 DE 102022001383
(43) Veröffentlichungstag der Anmeldung: 06.12.2023
(73) Patentinhaber: Mercedes-Benz Group AG, 70372 Stuttgart (DE)
(72) Erfinder: HOIS, Joana, 71034 Böblingen (DE); HANUSCHKIN, Alexander, 71263 Weil der Stadt (DE); STUDER, Stefan, 70565 Stuttgart (DE)
(74) Vertreter: Novagraaf Group
(86) Internationale Anmeldenummer: PCT/EP2023/058714
(87) Internationale Veröffentlichungsnummer: WO 2023/202871

(56) Entgegenhaltungen:
- DE-A1- 102011 083 944
- DE-A1- 102017 215 542
- DE-A1- 102018 133 670
- DE-A1- 102018 203 426
- DE-A1- 102019 102 924

## Beschreibung

Die Erfindung betrifft ein Fahrzeug mit einem zumindest teilautomatisierten Betriebsmodus sowie ein Verfahren zur Ausgabe von Empfehlungen an eine fahrzeugführende Person des Fahrzeugs nach der im Oberbegriff der Ansprüche 1 und 9 näher definierten Art.

Moderne Fahrzeuge werden zunehmend mit Fahrerassistenzsystemen ausgestattet. Fahrerassistenzsysteme dienen zur Unterstützung der fahrzeugführenden Person bei der Fahraufgabenübernahme. Hierdurch lassen sich die Sicherheit im Straßenverkehr, die Effizienz im Betrieb eines Fahrzeugs sowie der Komfort für Fahrzeugnutzer steigern. Dabei sind diverse Fahrerassistenzsysteme dazu in der Lage, eine zumindest teilautomatisierte, in Zukunft auch autonome Steuerung des Fahrzeugs zu übernehmen. Ein Spurhalteassistent kann beispielsweise bei einer Fahrt auf einer Autobahn die aktuell vom Fahrzeug befahrene Fahrspur halten, ein Abstandsregeltempomat den Abstand zum Vordermann einhalten oder ein Parkassistent die Querführung des Fahrzeugs beim Rückwärtseiparken übernehmen, während die fahrzeugführende Person die Längsführung übernimmt.

Zur Nutzung eines Fahrerassistenzsystems, welches eine zumindest teilautomatisierte Fahrzeugführung ermöglicht, müssen in einer Fahrsituation Randbedingungen vorliegen, welche einen Einsatz des Fahrerassistenzsystems erlauben. So dürfen beispielsweise die zur Umgebungserfassung genutzten Sensoren nicht in ihrer Erfassung gestört sein und müssen ausreichend verwertbare Sensordaten liefern, oder es muss ein bestimmter Fahrzustand vorliegen, beispielsweise die Fortbewegung auf einem bestimmten Straßentyp innerhalb eines festgelegten Geschwindigkeitsbereichs. Steht eine zumindest teilautomatisierte Assistenzfunktion zur Verfügung, so muss diese typischerweise erst manuell aktiviert werden. Es kommt dabei jedoch vor, dass die fahrzeugführende Person des Fahrzeugs trotz zur Verfügung stehender Assistenzfunktionen diese nicht nutzt.

Gründe hierfür können beispielsweise der Verlust des Fahrspaßes bzw. Freude am Selbstfahren oder ein fehlendes Vertrauen in die Sicherheit des entsprechenden Fahrerassistenzsystems und Kontrollverlust sein. Die entsprechenden durch die Nutzung der Assistenzfunktion potenziell generierbaren Vorteile hinsichtlich Sicherheit, Effizienz und Komfort gehen hierdurch ungenutzt verloren.

Aus der DE 10 2017 208 504 A1 sind ein Fahrsystem und ein Verfahren zum Aktivieren einer Fahrfunktion zum automatisierten Fahren bekannt. Das in der Druckschrift offenbarte Verfahren erleichtert die Bedienung eines Fahrsystems, welches eine automatisierte Fahrfunktion anbietet. Das Verfahren sieht vor, nach Eingabe eines Nutzungswunsches einer automatisierten Fahrfunktion durch die fahrzeugführende Person die Verfügbarkeit der entsprechenden automatisierten Fahrfunktion zu überprüfen und diese bei Zutreffen der Verfügbarkeit der fahrzeugführenden Person anzubieten. Bei bestehendem Angebot ist die fahrzeugführende Person besonders komfortabel dazu in der Lage das Angebot anzunehmen, also die automatisierte Fahrfunktion zu aktivieren. Hierzu kann es bereits ausreichen, dass die fahrzeugführende Person zum Aktivieren der automatisierten Fahrfunktion ihre Hände vom Lenkrad nimmt. Hierdurch entfällt das Erfordernis, dass die fahrzeugführende Person während der Nutzung ihres Fahrzeugs die generelle Verfügbarkeit der automatisierten Fahrfunktion erst manuell überprüfen muss und dann bei bestehender Verfügbarkeit diese durch manuelle Eingabe einer Bedienhandlung aktivieren muss.

Die DE 10 2018 203 426 A1 offenbart ein Verfahren zum Betrieb eines Kraftfahrzeugs, welches ein zur vollständig automatischen Führung des Kraftfahrzeugs ausgebildetes Autopilotsystem aufweist. In Abhängigkeit einer aktuellen und/oder vorausliegenden, durch Fahrsituationsdaten und/oder Betriebszustandsdaten des Kraftfahrzeugs beschriebenen Betriebssituation und einer den Einsatzbereich des Autopilotsystems beschreibenden Systemgrenzeninformation wird eine technische Aktivierbarkeitsinformation ermittelt. Eine Anzeigeeinrichtung weist ein erstes Ausgabeelement auf, das die Aktivierbarkeit des Autopilotsystems gemäß der technischen Aktivierbarkeitsinformation anzeigt. Zusätzlich zu der technischen Aktivierbarkeitsinformation wird in Abhängigkeit von der Betriebssituation und von Vorlieben bezüglich des Autopilotsystems und/oder den Zustand eines Fahrers bezüglich der Fahrzeugführung beschreibenden Fahrerdaten eine fahrerbezogene Empfehlungsinformation ermittelt und in deren Abhängigkeit ein zweites, eine Aktivierungsempfehlung und/oder eine Deaktivierungsempfehlung anzeigendes Ausgabeelement der Anzeigeeinrichtung angesteuert.

Aus der DE 10 2017 215 542 A1 ist ein Verfahren zum Betrieb eines eine Fahrerassistenzfunktion realisierenden Fahrerassistenzsystems eines Kraftfahrzeugs bekannt, wobei die Fahrerassistenzfunktion nur bei Erfüllung wenigstens eines Aktivierungskriteriums fahrerseitig aktivierbar ist und bei Erfüllung wenigstens eines Deaktivierungskriteriums automatisch deaktiviert wird. Bei Aktivierbarkeit des Fahrerassistenzsystems wird eine Aktivierbarkeitsinformation an einen Fahrer ausgegeben und eine voraussichtliche Aktivitätszeit bis zum Eintritt eines Deaktivierungskriteriums ermittelt und gemeinsam mit der Aktivierbarkeitsinformation ausgegeben. Zu der voraussichtlichen Aktivitätszeit wird ein Verlässlichkeitswert der Aktivitätszeit bestimmt und die Ausgabe der Aktivierbarkeitsinformation und/oder der Aktivitätszeit in Abhängigkeit des Verlässlichkeitswertes angepasst.

Die DE 10 2018 133 670 A1 offenbart ein Verfahren, bei dem ein Umfeld, ein Wetter und ein Fahrer unter Verwendung auch von extern importierten Fahrermodellen als Kontextdaten ermittelt wird. Ein Musterlernmodul analysiert die Kontextdaten um neue Regeln zu erlernen. Hierfür können Methoden der künstlichen Intelligenz und des Maschinenlernens verwendet werden. Die Wahrscheinlichkeit dafür, dass die Ausführung der Regel den Präferenzen des Nutzers entspricht, wird anhand eines Konfidenzwerts der Regel angegeben. Je nach Konfidenzwert wird entweder eine Empfehlung zum Ausführen einer Bedienhandlung an den Nutzer oder ein Steuersignal zum automatischen Ausführen einer Bedienhandlung ausgegeben.

Der vorliegenden Erfindung liegt die Aufgabe zugrunde ein verbessertes Fahrzeug mit einem zumindest teilautomatisierten Betriebsmodus und ein Verfahren zur Ausgabe von Empfehlungen an eine fahrzeugführende Person des Fahrzeugs zur Übernahme der Fahrzeugsteuerung anzugeben, mit deren Hilfe der Nutzungsanteil eines zumindest teilautomatisierten Betriebs des Fahrzeugs während einer Fahrt gesteigert wird.

Erfindungsgemäß wird diese Aufgabe durch ein Fahrzeug mit den Merkmalen des Anspruchs 1 sowie ein Verfahren zur Ausgabe von Empfehlungen an eine fahrzeugführende Person des Fahrzeugs zur Übernahme einer manuellen Fahrzeugsteuerung durch die fahrzeugführende Person oder zur Übernahme einer zumindest teilautomatisierten Fahrzeugsteuerung durch ein Fahrerassistenzsystem mit den Merkmalen des Anspruchs 9 gelöst. Vorteilhafte Ausgestaltungen und Weiterbildungen ergeben sich aus den hiervon abhängigen Ansprüchen.

Ein Fahrzeug mit einem zumindest teilautomatisierten Betriebsmodus verfügt erfindungsgemäß über ein Empfehlungssystem umfassend ein Datenerhebungsmodul ein Prädiktionsmodul und ein Empfehlungsmodul, wobei das Datenerhebungsmodul dazu eingerichtet ist Fahrzeugdaten, Umgebungsdaten und/oder Umweltdaten zu erheben; das Prädiktionsmodul dazu eingerichtet ist ein Fahrerprofil aus einer Menge an Fahrerprofilen einzulesen, wobei jedes Fahrerprofil ein individuell für das jeweilige Fahrerprofil angelerntes Maschinenlernmodell umfasst, welches dazu eingerichtet ist die Fahrzeugdaten, Umgebungsdaten und/oder Umweltdaten zumindest für einen vorausliegenden Streckenabschnitt einzulesen und als Ausgangsgröße einen prädiktiven Indikationswert auszugeben, wobei es sich bei dem prädiktiven Indikationswert um einen Zahlenwert handelt; und das Empfehlungsmodul dazu eingerichtet ist den prädiktiven Indikationswert mit einem Indikationsschwellwert zu vergleichen und im Fahrzeug das Ausgeben einer Empfehlung zur Übernahme einer manuellen Fahrzeugsteuerung durch eine fahrzeugführende Person zu veranlassen, wenn der prädiktive Indikationswert gegenüber dem Indikationsschwellwert in einem ersten Bereich liegt und im Fahrzeug das Ausgeben einer Empfehlung zur Übernahme einer zumindest teilautomatisierten Fahrzeugsteuerung durch ein Fahrerassistenzsystem zu veranlassen, wenn der prädiktive Indikationswert gegenüber dem Indikationsschwellwert in einem zweiten Bereich liegt.

Das erfindungsgemäße Fahrzeug ist dazu in der Lage der fahrzeugführenden Person unter Berücksichtigung ihres Fahrstils genau dann einen Vorschlag zur Übernahme der manuellen Fahrzeugsteuerung auszugeben, wenn die fahrzeugführende Person entsprechend ihrer persönlichen Fahrzeugnutzungsvorlieben wahrscheinlich selbst gerne die Kontrolle über das Fahrzeug übernehmen möchte und eine Empfehlung zur Übernahme der Fahrzeugsteuerung durch ein Fahrerassistenzsystem auszugeben, wenn die entsprechende Fahrerassistenzfunktion zur Verfügung steht und die fahrzeugführende Person dabei wahrscheinlich nicht selbst das Fahrzeug steuern möchte. Mit anderen Worten gibt das Fahrzeug an die fahrzeugführende Person eine Empfehlung zur Übernahme einer zumindest teilautomatisierten Fahrzeugsteuerung aus, wenn die fahrzeugführende Person sehr wahrscheinlich diese Aufforderung auch nachkommt. Hierdurch wird der Auslastungsgrad der zumindest teilautomatisierten Fahrzeugsteuerung während einer Fahrt mit dem Fahrzeug gesteigert.

Liegt eine Situation vor, in der eine zumindest teilautomatisierte Fahrzeugsteuerung möglich ist, so wird die fahrzeugführende Person darauf hingewiesen, die Fahrzeugsteuerung an das Fahrerassistenzsystem zu übergeben, wodurch vermieden wird, dass auf einer Fahrstrecke, auf der eine zumindest teilautomatisierte Fahrzeugsteuerung möglich ist, diese Funktion ungenutzt bleibt. Es besteht jedoch die Möglichkeit, dass die fahrzeugführende Person trotz zur Verfügung stehender zumindest teilautomatisierter Fahrfunktionen die Steuerung über das Fahrzeug nicht abgeben möchte, beispielsweise weil die fahrzeugführende Person auf dem Streckenabschnitt viel Fahrspaß erlebt. In einem solchen Fall unterbleibt das Ausgeben der Empfehlung zur Übergabe der Fahrzeugsteuerung an das Fahrzeug, was den Komfort der fahrzeugführenden Person erhöht, da keine unnötigen Empfehlungen ausgegeben werden. Auch ist es möglich, dass die zumindest teilautomatisierte Fahrzeugsteuerung aktiv ist und das Fahrzeug dennoch eine Empfehlung zur Übernahme einer manuellen Fahrzeugsteuerung an die fahrzeugführende Person ausgibt. So ermittelt das Fahrzeug in Abhängigkeit der persönlichen Vorlieben der fahrzeugführenden Person auf welchen Streckenabschnitten die fahrzeugführende Person wahrscheinlich das Fahrzeug selbst steuern möchte und gibt entsprechende Empfehlungen aus. Hierdurch wird sichergestellt, dass die fahrzeugführende Person das Fahrzeug auch selbst steuert, wenn entsprechende Streckenabschnitte befahren werden, die einen erhöhten Fahrspaß bedingen. Hierdurch wird nach und nach die Akzeptanz der Nutzung zumindest teilautomatisierter Fahrfunktionen für die fahrzeugführende Person erhöht, sodass sie bei zur Verfügung stehen der zumindest teilautomatisierten Fahrfunktion diese auch vermehrt nutzt.

So wird vom Fahrzeug zum Beispiel dann eine Empfehlung zur Übernahme der zumindest teilautomatisierten Fahrzeugsteuerung ausgegeben, wenn ein monotoner und langweiliger Streckenabschnitt für die fahrzeugführende Person während der Fahrt ansteht, sodass entsprechend auch die fahrzeugführende Person hier die Fahrzeugsteuerung gerne an das zumindest teilautomatisierte Fahrerassistenzsystem abgibt. Das Fahrzeug liest dabei die Vorlieben der fahrzeugführenden Person aus dem Fahrerprofil aus und erkennt hierdurch auch vorausliegende Situationen, in denen die fahrzeugführende Person zwar ansonsten gerne ihr Fahrzeug manuell steuern möchte, dies jedoch aktuell aufgrund geänderter Randbedingungen nicht wünscht, beispielsweise weil ein zu hohes Verkehrsaufkommen vorliegt und/oder widrige Witterungsbedingungen vorliegen und/oder gerade ein Telefongespräch geführt wird und/oder weitere Passagiere im Fahrzeug befindlich sind. So erkennt das Fahrzeug eine vorausliegende Fahrsituation, in der die Fahrsicherheit durch eine zumindest teilautomatisierte Steuerung gegenüber einer manuellen Steuerung gesteigert werden kann, woraufhin die fahrzeugführende Person die Steuerung des Fahrzeugs an das Fahrerassistenzsystem übergibt, da hierdurch das Sicherheitsgefühl der fahrzeugführenden Person gesteigert wird.

Das Fahrzeug kann dabei einen beliebigen Automatisierungsgrad aufweisen. Das Fahrzeug kann also zumindest teilautomatisiert steuerbar sein, was einer assistierten Fahrzeugsteuerung durch das Fahrerassistenzsystem entspricht. So kann beispielsweise das Fahrerassistenzsystem die Fahrzeugquer- oder Fahrzeuglängsführung übernehmen, wobei die entsprechende verbleibende Fahrzeuglängs- bzw. -querführung von der fahrzeugführenden Person übernommen wird. Das Fahrzeug kann jedoch auch hochautomatisiert, vollautomatisiert oder gar autonom gesteuert werden. Im autonomen Betriebsmodus sind keine Eingriffe der fahrzeugführenden Person mehr notwendig, sodass das Fahrzeug generell auch bei Abwesenheit oder Ablenkung der fahrzeugführenden Person seine Fahraufgabe erledigen kann.

Das Datenerhebungsmodul erhebt dabei Fahrzeugdaten, Umgebungsdaten und/oder Umweltdaten. Zu den Fahrzeugdaten zählen mit Hilfe von Sensoren vom Fahrzeug selbst erfasste und das Fahrzeug betreffende Informationen, wie beispielsweise eine vom Fahrzeug gemessene Fortbewegungsgeschwindigkeit, Fahrzeugbeschleunigung, Fahrzeuglage, Lenkwinkel, Gaspedalstellung oder dergleichen. Zu den Umgebungsdaten zählen vom Fahrzeug selbst ermittelte, die nähere Umgebung des Fahrzeugs betreffende Informationen wie ein Streckenverlauf, beispielsweise bestimmt durch Auswerten von einer Umgebungskamera erzeugter Kamerabilder, eine selbst gemessene Straßenoberflächenbeschaffenheit, eine Straßenbreite, eine gemessene Umgebungstemperatur, durch Verkehrszeichen angezeigte Verkehrsregeln, Baustellen und andere Hindernisse im Bereich der Fahrbahn, beispielsweise ebenfalls erkannt in den von der Umgebungskamera erzeugten Kamerabildern, mit Hilfe eines Feuchtigkeitssensors detektierter Niederschlag oder dergleichen. Zu den Umweltdaten zählen die Umgebung des Fahrzeugs betreffende Informationen, die von fahrzeugextern bezogen werden oder aus einem Speicher ausgelesen werden. Hierzu zählt beispielsweise der aus einer digitalen Straßenkarte ausgelesene Streckenverlauf sowie die für den Streckenverlauf geltenden Verkehrsregeln, von einem Verkehrsdienst bezogene Verkehrsinformationen, ein Wetterbericht und dergleichen. Mit den Umgebungsdaten lassen sich Umweltdaten verifizieren. Außerdem lassen sich für einen vorausliegenden Streckenabschnitt die entsprechenden Daten auch abschätzen. So kann beispielsweise ein Streckenverlauf aus einer digitalen Straßenkarte ausgelesen werden oder für die nächsten 200 Meter aus Kamerabildern ermittelt werden und die beim Befahren des entsprechenden Streckenabschnitts erwarteten Lenkwinkel, Beschleunigungswerte und Fortbewegungsgeschwindigkeit prädiziert werden. Zur Verarbeitung dieser "heterogenen" Daten kann das Prädiktionsmodul auch Verfahren für semantische Netzwerke wie Knowledge Graphs und/oder Ontologies einsetzen.

Die Fahrzeugdaten, Umgebungsdaten und/oder Umweltdaten können sich auf das Steuerungsverhalten der fahrzeugführenden Person auswirken, und werden daher zur Ermittlung der Empfehlung zur Übernahme einer manuellen oder zumindest teilautomatisierten Fahrzeugsteuerung berücksichtigt. Beispielsweise möchte ein sportlicher Fahrer bei einer besonders kurvenreichen Strecke das Fahrzeug manuell führen. Ist dabei jedoch mit Glätte zu rechnen, beispielsweise bedingt durch Nässe oder Temperaturen unterhalb des Gefrierpunkts, so kann die fahrzeugführende Person jedoch eine zumindest teilautomatisierte Fahrzeugsteuerung wünschen. Ein weiteres Beispiel für eine Fahrsituation, in der eine zumindest teilautomatisierte Fahrzeugsteuerung von der fahrzeugführenden Person erwünscht wird, ist beispielsweise eine monotone Fahrsituation wie Stau oder stockender Verkehr oder das Befahren eines besonders langen Straßenabschnitts mit konstantem Tempolimit. Unter Berücksichtigung insbesondere sowohl der Fahrzeugdaten, Umgebungsdaten und Umweltdaten lassen sich somit in besonders differenzierter Art und Weise vielfältige Fahrsituationen erkennen und unterscheiden.

In den Fahrerprofilen sind, abstrakt ausgedrückt, die Zusammenhänge wie eine Person mit einem bestimmten Fahrstil in Abhängigkeit von eine jeweilige Fahrsituation beschreibenden Randbedingungen ihr Fahrzeug manuell steuern würde gespeichert. Die Randbedingungen werden dabei durch die Fahrzeugdaten, Umgebungsdaten und/oder Umweltdaten beschrieben. Die Verarbeitung der Randbedingungen erfolgt dann durch ein entsprechend auf den jeweiligen Fahrstil jeweiliger Fahrerprofile angelerntes, im Prädikationsmodell gespeicherten Maschinenlernmodell. Die fahrzeugführende Person legt dabei initial, beispielsweise beim Kauf des Fahrzeugs oder zu Beginn einer jeden Fahrt, für ihr Fahrzeug fest, zu welchem Fahrerprofil sie sich zugeordnet fühlt. Das Prädikationsmodul wählt dann aus einem diesem zugeordneten Speicher das dem ausgewählten Fahrstil zugehörige Maschinenlernmodell oder heurischtisches Modell aus und liest dieses ein. Die Gesamtheit der Fahrerprofile kann beispielsweise von einem Fahrzeughersteller vorgegeben werden. Dabei kann eine bestimmte Anzahl an Standardfahrerprofilen vordefiniert sein. Beispiele für Fahrerprofile können sein: Sportlich, Vorausschauend, Sicher, Fahranfänger, nicht mehr junge bzw. körperlich beeinträchtige Fahrer oder dergleichen.

Das Maschinenlernmodell liest als Eingangsdaten die Fahrzeugdaten, Umgebungsdaten und/oder Umweltdaten ein, also beispielsweise eine für den vorausliegenden Streckenabschnitt erwartete Bremspedalstellung, Lenkwinkel, Beschleunigungswerte, Lagewerte, Staumeldungen, Höhenprofile, Streckenverläufe, Wetterinformationen und dergleichen. Als Ausgangsgröße wird der prädiktive Indikationswert ausgegeben. Dieser entspricht einem Zahlenwert innerhalb eines Vorgegebenen Wertebereichs, beispielsweise zwischen 0 und 1 oder -1 und 1. Für verschiedene Fahrerprofile werden dann verschieden antrainierte Maschinenlernmodelle vorgehalten.

Zum Antrainieren der verschiedenen Maschinenlernmodelle werden für verschiedene Streckenverläufe unterschiedliche Fahrer einer Fahraufgabe unterzogen und geben für die jeweiligen Streckenabschnitte an, ob eine manuelle oder eine zumindest teilautomatisierte Fahrzeugsteuerung bevorzugt wird. Hierdurch lernen die unterschiedlichen Maschinenlernmodelle in Abhängigkeit eines jeweiligen Streckenverlaufs und den durch die Fahrzeugdaten, Umgebungsdaten und/oder Umweltdaten beschriebenen Randbedingungen wie das Fahrzeug in Abhängigkeit des mit dem Fahrerprofil einhergehenden Fahrstils bevorzugt gesteuert werden soll. Entsprechend geben die unterschiedlichen Maschinenlernmodelle dann zu den jeweiligen Streckenverläufen passende prädiktive Indikationswerte aus.

Der prädiktive Indikationswert wird vom Empfehlungsmodul dann mit dem Indikationsschwellwert verglichen und in Abhängigkeit des Ergebnisses für den vorausliegenden Streckenabschnitt die Empfehlung zur manuellen Fahrzeugsteuerung oder zur zumindest teilautomatisierten Fahrzeugsteuerung ausgegeben.

Der Indikationsschwellwert kann als fester Wert vorgegeben werden. Beispielsweise kann der Indikationsschwellwert 0,5 betragen. Der erste Bereich kann dann beispielsweise ein Bereich zwischen 0,5 und 1 sein und der zweite Bereich ein Bereich zwischen 0 und 0,5. Der erste oder zweite Bereich kann auch den Wert "0,5" umfassen. Beispielsweise liegt der erste Bereich im Wertebereich von 0,5 bis 1 und der zweite Bereich im Wertebereich von 0 bis 0,499 oder umgekehrt. Dabei müssen der erste und/oder zweite Bereich nicht zwangsweise ober oder unter dem Indikationsschwellwert liegen. Der erste und zweite Bereich können auch als Verhältnis aufgefasst werden. Beispielsweise kann der erste Bereich einen Bereich ≥ 1 und der zweite Bereich einen Bereich zwischen 0 und 1 entsprechen. Auch kann der erste Bereich einem positiven Bereich und der zweite Bereich einem negativen Bereich oder umgekehrt entsprechen.

Die Ausgabe der Empfehlung zur Übernahme der Fahrzeugsteuerung kann im Fahrzeug auf vielfältige Art und Weise erfolgen, beispielsweise akustisch, visuell und/oder haptisch. Beispielsweise kann das Lenkrad des Fahrzeugs vibrieren, wenn eine neue Empfehlung ausgegeben wird. Die Empfehlung kann dann akustisch als Text wiedergegeben werden, beispielsweise als folgende gesprochene Nachricht: "Es liegt ein kurviger Streckenabschnitt voraus. Es wird eine manuelle Fahrzeugsteuerung empfohlen.". Die entsprechende Nachricht, gegebenenfalls ergänzt durch Piktogramme, Symbole, Bilder, Animationen oder dergleichen kann auch auf einer beliebigen Anzeigevorrichtung im Fahrzeug, beispielsweise im Kombiinstrument oder auf dem Display der Head-Unit, dargestellt werden.

Den vorausliegenden Streckenabschnitt kann das Fahrzeug auf verschiedene Art und Weise ermitteln. Beispielsweise kann das Fahrzeug über ein Navigationssystem verfügen, in welches eine Route einprogrammiert ist. Die Route wird dann in Streckenabschnitte unterteilt. Entsprechende vorausliegende Streckenabschnitte ergeben sich dann aus der noch vom Fahrzeug zurückzulegenden Route. Bei inaktiver Routenführung kann auch der sogenannte wahrscheinlichste Pfad, den das Navigationssystem auf Basis historischer Daten ermittelt, genutzt werden. Bei inaktiver Routenführung kann das Fahrzeug einen unmittelbar vorausliegenden Streckenabschnitt als den vorausliegenden Streckenabschnitt bestimmen. Beispielsweise können die nächsten 100 Meter Fahrstrecke als nächster vorausliegender Streckenabschnitt bestimmt werden. Liegen auf dem vorausliegenden Streckenabschnitt Kreuzungen, Abfahrten, Zubringer oder dergleichen, so kann der nächste vorausliegende Streckenabschnitt auch bis zu einem solchen Straßenelement reichen. Das Fahrzeug ist auch dazu in der Lage ohne ein Navigationssystem einen vorausliegenden Streckenabschnitt zu bestimmen. Hierzu kann das Fahrzeug die Fahrzeugdaten auswerten und beispielsweise einen Streckenverlauf selbst ermitteln. Hierzu kann das Fahrzeug mit Hilfe von Tiefeninformationssensoren wie einer Stereokamera, einem LIDAR, einem Ultraschallsensor und/oder einem Radarsystem den unmittelbar vorausliegenden Streckenverlauf erkennen.

Gemäß der Erfindung ist das Empfehlungsmodul ferner dazu eingerichtet, die Höhe des Indikationsschwellwerts in Abhängigkeit eines vom Prädiktionsmodul eingelesenen Fahrerprofils, der Fahrzeugdaten, Umgebungsdaten und/oder Umweltdaten anzupassen. Hierdurch ist eine besonders einfache, schnelle und flexible Reaktion möglich, um eine Entscheidung, welcher Betriebsmodus des Fahrzeugs empfohlen werden soll, zu treffen. Beträgt der Indikationsschwellwert initial beispielsweise 0,5, so kann er in Abhängigkeit des Fahrerprofils erhöht oder reduziert werden. So kann er für das Fahrerprofil "Sportlich" beispielsweise auf 0,3 herabgesetzt werden, wenn bei im Vergleich näher an 1 liegenden Indikationswerten die Empfehlung zur manuellen Fahrzeugsteuerung ausgegeben wird und beispielsweise für das Fahrerprofil "Sicherheit" auf 0,8 angehoben werden. Entsprechend kann der Indikationsschwellwert auch in Abhängigkeit der Fahrzeugdaten, Umgebungsdaten und/oder Umweltdaten angepasst werden. So kann das Fahrzeug einen vorausliegenden Streckenabschnitt analysieren und beispielsweise für einen monotonen Streckenabschnitt den Indikationsschwellwert auf 0,7 setzen und für einen aufregenden Streckenabschnitt auf 0,33.

Eine vorteilhafte Weiterbildung des Fahrzeugs sieht vor, dass das Empfehlungssystem ferner ein Fahrerüberwachungsmodul umfasst, welches dazu eingerichtet ist, mit Hilfe wenigstens eines Sensors die fahrzeugführende Person zu überwachen und aus vom Sensor erzeugten Sensordaten ein aktuelles Steuerungsverhalten und/oder einen aktuellen Fahrerzustand zu ermitteln und die fahrzeugführende Person in Abhängigkeit des ermittelten aktuellen Steuerungsverhaltens und/oder dem aktuellen Fahrerzustand einem der Fahrerprofile zuzuordnen. So wird nach und nach das Fahrverhalten der fahrzeugführenden Person erkannt und ein für das entsprechende Fahrverhalten adäquat passendes Fahrerprofil durch das Fahrzeug ausgewählt, wodurch andere prädiktive Indikationswerte ausgegeben werden. Hierdurch lässt sich der Komfort für die fahrzeugführende Person noch weiter steigern, da somit der Grad an Übereinstimmung zwischen dem tatsächlichen Fahrstil der fahrzeugführenden Person und dem vom Fahrzeug angenommenen Fahrstil erhöht wird, wodurch das Empfehlungssystem dazu in die Lage versetzt wird noch zutreffendere Empfehlungen zur Übernahme der Fahrzeugsteuerung auszugeben. Hierdurch wird die Wahrscheinlichkeit erhöht, dass die vom Fahrzeug ausgegebenen Empfehlungen zur Übernahme der Fahrzeugsteuerung auch tatsächlich von der fahrzeugführenden Person umgesetzt werden.

Zur Erfassung des aktuellen Steuerungsverhaltens kann das Lenkverhalten und Beschleunigungs- bzw. Bremsverhalten der fahrzeugführenden Person analysiert werden. Hierzu werden die entsprechend während der Fahrt eingestellten Lenkwinkel sowie Pedalstellungen erfasst und vom Fahrerüberwachungsmodul analysiert.

Der Fahrerzustand beschreibt insbesondere eine emotionale Stimmung, Aufmerksamkeit und/oder Grad der kognitiven Belastung der fahrzeugführenden Person. Hierzu werden Vitalparameter der fahrzeugführenden Person überwacht, wie eine Pulsfrequenz, Atemfrequenz, Hautleitfähigkeit, Hauttemperatur, Blickrichtung, Lidschlagfrequenz, Blickrichtungsänderungsfrequenz und dergleichen. Beispielsweise kann eine erhöhte Pulsfrequenz, erhöhte Hautleitfähigkeit und/oder Körpertemperatur auf eine erhöhte Konzentration und/oder das Erleben von Fahrspaß hindeuten.

So wird beispielsweise eine fahrzeugführende Person die in einer hektischen Verkehrssituation ruhig bleibt und/oder in einer monotonen Verkehrssituation gestresst ist einem sportlichen Fahrerprofil zugeordnet und eine Person die in einer hektischen Verkehrssituation aufgeregt ist und/oder in einer monotonen Verkehrssituation entspannt ist einem komfortablen Fahrerprofil zugeordnet.

Das Prädiktionsmodul kann ferner dazu eingerichtet sein für einen vorausliegenden Streckenabschnitt ein prädiziertes Steuerungsverhalten und/oder einen prädizierten Fahrerzustand abzuschätzen, also ein erwartetes, sich auf dem vorausliegenden Streckenabschnitt wahrscheinlich einstellendes aktuelles Steuerungsverhalten und/oder Fahrerzustand. So kann das prädizierte Steuerungsverhalten mit dem aktuellen Steuerungsverhalten und/oder der prädizierte Fahrerzustand mit dem aktuellen Fahrerzustand verglichen werden, um eine Vorhersagegüte des Prädiktionsmoduls, insbesondere eines jeweiligen dem entsprechenden Fahrerprofil zugrunde liegenden Maschinenlernmodells, zu bewerten.

Zum Zuordnen eines passenden Fahrerprofils für die fahrzeugführende Person kann auch das Umsetzungsverhalten der vom Fahrzeug ausgegebenen Empfehlung zur Übernahme der Fahrzeugsteuerung herangezogen werden. Folgt die fahrzeugführende Person der Empfehlung des Fahrzeugs öfter als ein festgelegter Schwellwert, so geht das Fahrzeug davon aus, dass ein adäquates Fahrerprofil ausgewählt wurde. Folgt die fahrzeugführende Person hingegen der vom Fahrzeug getroffenen Empfehlung zur Übernahme der Fahrzeugsteuerung nicht oder weniger oft als der festgelegte Schwellwert, so wird bevorzugt ein neues Fahrerprofil eingestellt.

Ein vordefiniertes "Standardfahrerprofil" lässt sich ferner in Abhängigkeit des tatsächlichen Steuerungsverhaltens und/oder Fahrerzustands der fahrzeugführenden Person über die Nutzungsdauer ihres Fahrzeugs auf den tatsächlichen Fahrstil der fahrzeugführenden Person anpassen und zudem in seiner Vorhersagegüte durch beständiges Training verbessern. Hierzu ist entsprechend einer weiteren vorteilhaften Ausgestaltung des Fahrzeugs, das Fahrerüberwachungsmodul ferner dazu eingerichtet, aus aktuellen Daten wie dem aktuellen Steuerungsverhalten und/oder dem aktuellen Fahrerzustand einen aktuellen Indikationswert zu bestimmen und das Prädiktionsmodul ferner dazu eingerichtet, das aktuelle Steuerungsverhalten, den aktuellen Fahrerzustand und/oder den aktuellen Indikationswert einzulesen und hiermit das Maschinenlernmodell weiter zu trainieren. Mit den vorab genannten aktuellen Daten und den gleichfalls aktuell vom Datenerhebungsmodul eingelesenen Daten der Umgebung und/oder Umwelt für einen aktuell befahrenen Streckenabschnitt lässt sich das Maschinenlernmodell oder das heuritische Modell kontinuierlich weitertrainien. Hierdurch wird die Vorhersagefähigkeit des Maschinenlernmodells für vorausliegende Streckenabschnitte noch weiter verbessert, sodass die vom Empfehlungssystem ausgegebenen Empfehlungen noch häufiger von der fahrzeugführenden Person umgesetzt werden.

Das prädizierte Steuerungsverhalten und/oder der prädizierte Fahrerzustand können ebenfalls als Eingangsgröße zur Bestimmung des prädiktiven Indikationswerts in das Maschinenlernmodell eingehen. Durch einen Vergleich mit dem aktuellen Steuerungsverhalten und/oder dem aktuellen Fahrerzustand kann das Prädiktionsmodul dann überprüfen, wie gut es das prädizierte Steuerungsverhalten und/oder den prädizierten Fahrerzustand vorhergesagt hat. Entsprechend lernt das Maschinenlernmodell und verbessert seine Vorhersagegüte.

Analog kann ein für das jeweilige Fahrerprofil trainiertes Maschinelernmodell auch in das Fahrerüberwachungsmodul integriert sein, um aus den aktuellen Daten den aktuellen Indikationswert zu bestimmen. Der vom Fahrerüberwachungsmodul ausgegebene aktuelle Indikationswert kann dann ebenfalls vom Prädiktionsmodul berücksichtigt werden, um anhand der aktuellen Indikationswertes die Vorhersagegüte des prädiktiven Indikationswerts zu überprüfen und zur Fehlerminimierung das Maschinenlernmodell anzupassen.

Eine weitere vorteilhafte Ausgestaltung des Fahrzeugs sieht ferner vor, dass das Prädiktionsmodul ferner dazu eingerichtet ist, das Maschinenlernmodell unter Berücksichtigung einer tatsächlichen Umsetzung der von dem Empfehlungsmodul getroffenen Empfehlung zur Übernahme der Fahrzeugsteuerung weiter zu trainieren. Ein entsprechendes Ergebnis, ob die Empfehlung zur manuellen oder zumindest teilautomatisierten Übernahme der Fahrzeugsteuerung auch tatsächlich durch die fahrzeugführende Person umgesetzt oder abgelehnt wurde, kann von einem Steuergerät als Feedback an das Prädiktionsmodul rückübermittelt werden, wodurch dasMaschinenlernmodell oder das heuristische Modell und die damit getroffene Vorhersagenoch weiter verbessert wird.

Entsprechend einer weiteren vorteilhaften Ausgestaltung des Fahrzeugs ist das Empfehlungssystem dazu eingerichtet Flottendaten zu empfangen, wobei die Flottendaten eine aggregierte Menge an nutzerindividuellem Steuerungsverhalten und/oder Fahrerzustände der Nutzer und zugehörigen Umgebungs- und Umweltdaten einer Vielzahl an Flottenfahrzeuge umfassen, und aus den Flottendaten Fahrerprofile abzuleiten und/oder ein bestehendes Fahrerprofil zu aktualisieren, wobei sich innerhalb festgelegter Grenzen ähnelndes Steuerungsverhalten und/oder Fahrerzustände demselben Fahrerprofil zugeordnet wird. Durch das Erheben und Nutzen der Flottendaten sind die entsprechenden Maschinenlernmodelle der jeweiligen abgeleiteten Fahrerprofile unter Verwendung besonders umfassender Datensätze trainierbar. Dies ermöglicht es besonders umfangreiche und differenzierte Fahrerprofile zu entwickeln, sodass für jede fahrzeugführende Person ein besonders zutreffendes Maschinenlernmodell entwickelt werden kann bzw. die einzelnen Fahrzeugnutzer diesen zugeordnet werden können. Aufgrund der Nutzung dieser großen Datensätze werden die einzelnen fahrerprofilspezifischen Maschinenlernmodelle zudem besonders zutreffend trainiert. Dies bedeutet, dass die Vorhersagegüte der jeweiligen Maschinenlernmodelle für die jeweiligen Fahrerprofile gesteigert werden kann, sodass die jeweiligen vom Empfehlungssystem ausgegebenen Empfehlungen auch nach Möglichkeit tatsächlich umgesetzt werden.

Zusätzlich zum nutzerindividuellen Steuerungsverhalten kann dabei auch der jeweilige nutzerindividuelle Fahrerzustand berücksichtigt werden. So kann das Steuerungsverhalten mit dem Fahrerzustand verknüpft werden, sodass für einen bestimmten Streckenabschnitt bzw. Fahrzeugdaten, Umgebungsdaten und/oder Umweltdaten auch ein fahrerprofilindividueller Fahrerzustand vorliegt. Bei einer besonders steilen und kurvenreichen Strecke mit häufig wechselnden und starken Lenkausschlägen sowie starkem Beschleunigungs- und Verzögerungsverhalten kann dann beispielsweise ein erster Fahrerzustand auf eine hohe kognitive Auslastung und Angst deuten und ein zweiter Fahrerzustand auf eine mittlere kognitive Auslastung und Freude. Entsprechend kann die Person mit dem ersten Fahrerzustand einem ängstlichen Fahrerprofil und eine Person mit dem zweiten Fahrerzustand einem sportlichen Fahrerprofil zugeordnet werden.

In einer weiteren vorteilhaften zusätzliche oder alternative Ausgestaltung des Fahrzeugs ist das Empfehlungssystem dazu eingerichtet Flottendaten zu empfangen, , wobei die Flottendaten ferner das Umsetzungsverhalten der von den Empfehlungsmodulen der Flottenfahrzeuge getroffenen Empfehlungen durch die Nutzer der Flottenfahrzeuge umfassen und das Prädiktionsmodul ferner dazu eingerichtet ist, das Maschinenlernmodell unter Berücksichtigung des Umsetzungsverhaltens der Nutzer des der fahrzeugführenden Person zugeordneten Fahrerprofils zu verbessern bzw. weiter zu trainieren. Dies kann als Filter verstanden werden, sodass, bevor das Maschinenlernmodell weiter trainiert wird, die entsprechenden zum Weitertrainieren verwendeten Eingangsdaten tatsächlich bei einer Vielzahl der Nutzer der Flottenfahrzeuge zu einer Verbesserung der Umsetzung der ausgegebenen Empfehlungen geführt hat. Hierdurch wird eine Verschlechterung des Maschinenlernmodells verhindert, welche zu einer reduzierten Umsetzung der entsprechenden Empfehlungen führen könnte. Beispielsweise können in Abhängigkeit der Fahrzeugdaten, Umgebungsdaten und/oder Umweltdaten bzw. daraus abgeleitetem prädizierten Steuerungsverhalten bzw. Fahrerzuständen Streckenabschnitte ermittelt werden, bei denen zumindest eine festgelegte Anzahl der Nutzer die ausgegebenen Empfehlungen auch tatsächlich umsetzen, beispielsweise mindestens 75 % der Nutzer.

Entsprechend einer weiteren vorteilhaften Ausgestaltung des Fahrzeugs umfasst das Maschinenlernmodell ein neuronales Netz. Mit Hilfe eines neuronalen Netzes - aber auch vergleichbaren Methoden des maschinellen Lernens - ist das Maschinenlernmodell besonders zuverlässig dazu in der Lage einen passenden prädiktiven Indikationswert in Abhängigkeit der Eingangsparameter zu bestimmen.

Eine weitere vorteilhafte Ausgestaltung des Fahrzeugs sieht ferner vor, dass ein Fahrzeugsteuergerät dazu eingerichtet ist, die vom Empfehlungssystem getroffene Empfehlung zur Übernahme der Fahrzeugsteuerung durch die fahrzeugführende Person oder das Fahrerassistenzsystem automatisch umzusetzen. Hierdurch lässt sich der Komfort für die fahrzeugführende Person noch weiter verbessern. So muss die fahrzeugführende Person bei Ausgabe einer entsprechenden Empfehlung nicht jedes Mal eine manuelle Bedienhandlung eingeben, damit der Empfehlung Folge geleistet wird. Das Fahrzeug kann die entsprechende Empfehlung also automatisch umsetzen, sprich eine zumindest teilautomatisierte Fahrzeugsteuerung aktivieren oder deaktivieren. Die fahrzeugführende Person kann beispielsweise in einem Konfigurationsmenü einstellen, dass für bestimmte Randbedingungen die automatische Übernahme der Empfehlung erfolgen soll. So kann es dann in bestimmten Situationen weiterhin erforderlich sein, dass die fahrzeugführende Person erst proaktiv auf die ausgegebene Empfehlung eingehen muss, bis die Empfehlung auch umgesetzt wird. Beispielsweise kann die zumindest teilautomatisierte Fahrzeugsteuerung immer automatisch aktiviert werden und die Übernahme der manuellen Fahrzeugsteuerung nur nach Bestätigung durch die fahrzeugführende Person.

Ein Verfahren zur Ausgabe von Empfehlungen an eine fahrzeugführende Person eines im vorigen beschriebenen Fahrzeugs zur Übernahme einer manuellen Fahrzeugsteuerung durch die fahrzeugführende Person oder zur Übernahme einer zumindest teilautomatisierten Fahrzeugsteuerung durch ein Fahrerassistenzsystem umfasst erfindungsgemäß die folgenden Schritte:
- Erheben von Fahrzeugdaten, Umgebungsdaten und/oder Umweltdaten durch ein Datenerhebungsmodul;
- Einlesen eines Fahrerprofil aus einer Menge an Fahrerprofilen durch ein Prädiktionsmodul, wobei jedes Fahrerprofil ein individuell für das jeweilige Fahrerprofil angelerntes Maschinenlernmodell umfasst, welches dazu eingerichtet ist die Fahrzeugdaten, Umgebungsdaten und/oder Umweltdaten zumindest für einen vorausliegenden Streckenabschnitt einzulesen und als Ausgangsgröße einen prädiktiven Indikationswert auszugeben, wobei es sich bei dem prädiktiven Indikationswert um einen Zahlenwert handelt;
- Bestimmen des prädiktiven Indikationswerts für den vorausliegenden Streckenabschnitt durch das Prädiktionsmodul; und
   - Vergleichen des prädiktiven Indikationswerts mit einem Indikationsschwellwert und Veranlassen der Ausgabe einer Empfehlung zur Übernahme einer manuellen Fahrzeugsteuerung durch die fahrzeugführende Person im Fahrzeug, wenn der prädiktive Indikationswert gegenüber dem Indikationsschwellwert in einem ersten Bereich liegt und Veranlassen der Ausgabe einer Empfehlung zur Übernahme einer zumindest teilautomatisierten Fahrzeugsteuerung durch ein Fahrerassistenzsystem im Fahrzeug, wenn der prädiktive Indikationswert gegenüber dem Indikationsschwellwert in einem zweiten Bereich liegt, durch ein Empfehlungsmodul, wobei das Empfehlungsmodul (2.3) ferner dazu eingerichtet ist die Höhe des Indikationsschwellwerts (IND-SW) in Abhängigkeit eines vom Prädiktionsmodul (2.2) eingelesenen Fahrerprofils, der Fahrzeugdaten (D-FZG), Umgebungsdaten (D-UMG) und/oder Umweltdaten (D-UMW) anzupassen.

Mit Hilfe des erfindungsgemäßen Verfahrens werden Empfehlungen für die fahrzeugführende Person des Fahrzeugs zur Übernahme einer manuellen oder zumindest teilautomatisierten Fahrzeugsteuerung im Fahrzeug ausgegeben. Dabei ist die Ausgabe der jeweiligen Empfehlung auf das jeweilige Fahrerprofil zugeschnitten, sodass genau dann eine Empfehlung zur manuellen Fahrzeugführung ausgegeben wird, wenn eine besonders hohe Wahrscheinlichkeit vorliegt, dass die fahrzeugführende Person auch tatsächlich ihr Fahrzeug manuell steuern möchte und entsprechend eine Empfehlung zur zumindest teilautomatisierten Steuerung ausgegeben wird, wenn die fahrzeugführende Person eine zumindest teilautomatisierte Fahrzeugsteuerung erwünscht oder zumindest nichts dagegen hat. Dies sorgt für eine verbesserte Akzeptanz von Fahrerassistenzsystemen, welche eine zumindest teilautomatisierte Fahrzeugsteuerung ermöglichen und erhöht dadurch den Nutzungsanteil der zumindest teilautomatisierten Fahrzeugsteuerung bei der Durchführung einer Fahrt.

Weitere vorteilhafte Ausgestaltungen des erfindungsgemäßen Fahrzeugs ergeben sich auch aus den Ausführungsbeispielen, welche nachfolgend unter Bezugnahme auf die Figuren näher beschrieben werden.

Dabei zeigen:
- Fig. 1: eine schematisierte Darstellung eines erfindungsgemäßen Fahrzeugs; und
- Fig. 2: eine schematisierte Darstellung der Informationsübertragungspfade der von einem auf einem Prädiktionsmodul ausgeführten Maschinenlernmodell eingelesenen und ausgegebenen Größen.

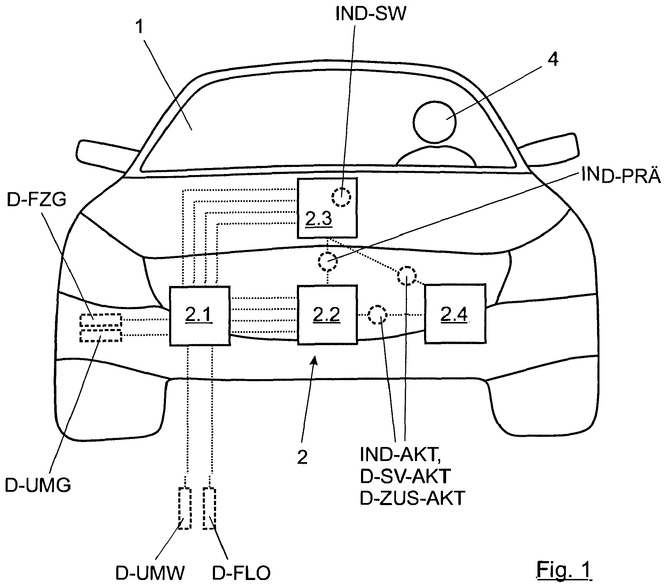

Figur 1 zeigt in einer schematisierten Frontalansicht ein erfindungsgemäßes Fahrzeug 1. Das Fahrzeug 1 umfasst ein Empfehlungssystem 2, umfassend ein Datenerhebungsmodul 2.1, ein Prädiktionsmodul 2.2, ein Empfehlungsmodul 2.3 sowie ein Fahrerüberwachungsmodul 2.4.

Das Fahrzeug 1 verfügt über einen zumindest teilautomatisierten Betriebsmodus. In Abhängigkeit verschiedener Randbedingungen steht der zumindest teilautomatisierte Betriebsmodus zur Verfügung und erlaubt es einer fahrzeugführenden Person 4 das Fahrzeug 1 zumindest teilautomatisiert zu steuern. Beispielsweise kann es sich hierbei um einen Abstandsregeltempomaten, einen Spurhalteassistenten, einen Einparkassistenten oder auch einen Autopiloten, sprich eine autonome Steuerung des Fahrzeugs 1, handeln. Das erfindungsgemäße Fahrzeug 1 ist dazu in der Lage eine Empfehlung an die fahrzeugführende Person 4 auszugeben, ob auf einem bei einer mit dem Fahrzeug 1 durchgeführten Fahrt vorausliegenden Streckenabschnitt eine manuelle Fahrzeugführung durch die fahrzeugführende Person 4 oder eine zumindest teilautomatisierte Fahrzeugsteuerung durch ein Fahrerassistenzsystem erfolgen soll. Dabei orientiert sich das Fahrzeug 1 an den Vorlieben der fahrzeugführenden Person 4, sodass genau dann eine Empfehlung zur manuellen Fahrzeugsteuerung ausgegeben wird, wenn mit einer hohen Wahrscheinlichkeit die fahrzeugführende Person 4 das Fahrzeug 1 selbst steuern möchte und eine Empfehlung zur zumindest teilautomatisierten Fahrzeugsteuerung ausgegeben wird, wenn die zumindest teilautomatisierte Fahrzeugsteuerung mit einer hohen Wahrscheinlichkeit zu einem erhöhten Nutzerkomfort für die fahrzeugführende Person 4 beiträgt.

Hierzu werden vom Datenerhebungsmodul 2.1 Fahrzeugdaten D-FZG, Umgebungsdaten D-UMG und Umweltdaten D-UMW erhoben. Bei den Fahrzeugdaten D-FZG handelt es sich um vom Fahrzeug 1 selbst erfasste und das Fahrzeug 1 betreffende Informationen wie eine Fortbewegungsgeschwindigkeit, Lage bzw. Orientierung im Raum, Beschleunigungswerte, eine Pedalstellung und dergleichen. Bei den Umgebungsdaten D-UMG handelt es sich um vom Fahrzeug 1 erfasste Informationen bezüglich der Umgebung des Fahrzeugs 1 wie ein Streckenverlauf, geltende Verkehrsregeln, eine Umgebungstemperatur, vorliegender Niederschlag oder dergleichen. Zur Erfassung des Streckenverlaufs kann das Fahrzeug 1 mit Hilfe von Umgebungssensoren wie eine Mono- oder Stereokamera, ein LIDAR, Ultraschallsensoren und/oder ein Radarsystem sein Umfeld abtasten und aus entsprechenden Sensordaten den Streckenverlauf ermitteln. Zu den Umweltdaten D-UMW zählen vom Fahrzeug 1 von extern bzw. aus einem Datenspeicher ausgelesene, die Umgebung betreffende Informationen wie ein aus einer digitalen Straßenkarte ausgelesener Streckenverlauf, in der digitalen Straßenkarte gespeicherte Verkehrsregeln, insbesondere für den vorausliegenden Streckenabschnitt, von einem Verkehrsdienst bezogene Verkehrsinformationen, von einem Wetterdienst bezogene Wetterberichte und dergleichen.

Zusätzlich ist das Fahrerüberwachungsmodul 2.4 mit Hilfe diverser Sensoren dazu eingerichtet die fahrzeugführende Person 4 zu überwachen und ein aktuelles Steuerungsverhalten D-SV-AKT sowie einen aktuellen Fahrerzustand D-ZUS-AKT zu erfassen. Zum aktuellen Steuerungsverhalten D-SV-AKT zählt beispielsweise das Lenkverhalten und/oder das Beschleunigungs- bzw. Bremsverhalten der fahrzeugführenden Person 4, abgeleitet aus einem Lenkwinkelsensor und/oder einem Pedalstellungssensor. Der aktuelle Fahrerzustand D-ZUS-AKT beschreibt beispielsweise eine emotionale Stimmung, Aufmerksamkeit, Grad der kognitiven Belastung durch die Fahraufgabe oder dergleichen der fahrzeugführenden Person 4. Hierzu kann die fahrzeugführende Person 4 mit Hilfe diverser Sensoren überwacht werden wodurch Vitalparameter erfasst werden können. Die entsprechenden zur Beurteilung des Fahrerzustands berücksichtigten Größen können dann aus den Vitalparametern abgeleitet werden. Zu den Vitalparametern zählen beispielsweise eine Pulsfrequenz, eine Lidschlagfrequenz, ein durch Bilderkennungsalgorithmen aus einer visuellen Überwachung abgeleitete Mimik der fahrzeugführenden Person 4, beispielsweise, ob die fahrzeugführende Person 4 lächelt, eine Hautleitfähigkeit, eine Hauttemperatur, eine Blickrichtung, eine Blickrichtungswechselfrequenz und dergleichen.

Ferner kann das Empfehlungssystem 2, beispielsweise ebenfalls über das Datenerhebungsmodul 2.1, Flottendaten D-FLO empfangen. Die Flottendaten D-FLO umfassen das Steuerungsverhalten einer Vielzahl unterschiedlicher Nutzer der Fahrzeuge 1 einer Fahrzeugflotte und/oder deren Fahrerzustände. Aus diesem Steuerungsverhalten und/oder Fahrerzuständen lassen sich verschiedene Fahrerprofile ableiten, welche repräsentativ sind für einen jeweiligen individuellen Fahrstil und dabei erlebte Emotionen.

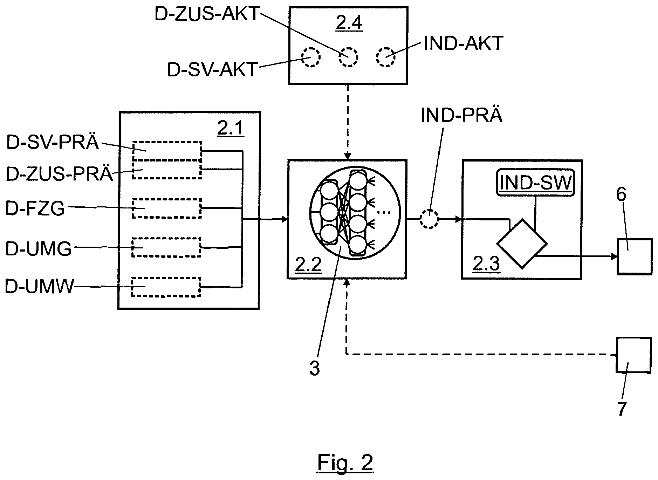

Beispielsweise wählt die fahrzeugführende Person 4 vor der Nutzung ihres Fahrzeugs 1 aus, zu welchem Fahrerprofil sie sich dazugehörig fühlt, beispielsweise zu einem sportlichen oder zu einem komfortablen Fahrerprofil. In Abhängigkeit eines ausgewählten Fahrerprofils bestimmt dann das Prädiktionsmodul 2.2 für das angelernte Maschinenlernmodell oder heuristische Modell, das für einen vorausliegenden Streckenabschnitt ermittelt, ob die fahrzeugführende Person 4 wahrscheinlich lieber das Fahrzeug 1 manuell oder zumindest teilautomatisiert steuert. Das gewählte Maschinenlernmodul oder das heuristische Modell des Prädiktionsmoduls 2.2verarbeitet die entsprechenden zumindest für den nächsten vorausliegenden Streckenabschnitt erwarteten Fahrzeugdaten D-FZG, Umgebungsdaten D-UMG und/oder Umweltdaten D-UMW und ist dadurch dazu in der Lage, die sich auf dem vorausliegenden Streckenabschnitt einstellende Fahrsituation realitätsgetreu abzuschätzen. Ein jeweiliges Fahrerprofil ist repräsentativ für das erwartete manuelle Steuerungsverhalten der fahrzeugführenden Person 4 in Abhängigkeit der erwarteten Fahrsituation auf dem vorausliegenden Streckenabschnitt. Hierdurch ist das Prädiktionsmodul 2.2 dazu in der Lage, ein von der fahrzeugführenden Person 4 auf dem vorausliegenden Streckenabschnitt erwartetes manuelles Steuerungsverhalten abzuschätzen. Zusätzlich oder alternativ kann das Prädiktionsmodul 2.2 auch einen erwarteten Fahrerzustand abschätzen. Durch einen Vergleich des erwarteten manuellen Steuerungsverhaltens, einer zu erwartenden Auswahl eines automatisierten Fahrbetriebs und/oder des erwarteten Fahrerzustands mit der erwarteten Fahrsituation auf dem vorausliegenden Streckenabschnitt schätzt des Prädiktionsmodul 2.2 dann ab, ob eine manuelle oder zumindest teilautomatisierte Fahrzeugsteuerung wahrscheinlich gewünscht oder empfehlenswert oder sicherer sein wird. Um diese abstrahiert beschriebenen Verfahrensschritte auszuführen umfasst das Prädiktionsmodul 2.2 für jedes Fahrerprofil das in Figur 2 gezeigtes, individuell auf das jeweilige Fahrerprofil antrainiertes Maschinenlernmodell 3. Das Maschinenlernmodell 3 liest als Eingangsdaten zumindest die Fahrzeugdaten D-FZG, Umgebungsdaten D-UMG und/oder Umweltdaten D-UMW ein. Als Ausgangsgröße liefert das Maschinenlernmodell 3 einen prädiktiven Indikationswert, bei dem es sich um einen simplen Zahlenwert handelt. Dabei kann es sich um eine natürliche Zahl, ganze Zahl, rationale Zahl oder auch eine gerundete irrationale Zahl handeln. Der prädiktive Indikationswert lässt sich einem zulässigen Wertebereich zuordnen, beispielsweise einem Wertebereich von -1 bis 1 oder von 0 bis 1 oder dergleichen. Der prädiktive Indikationswert lässt sich als ein Wert auffassen, welcher die Affinität der fahrzeugführenden Person 4 zur Steuerung des Fahrzeugs 1 durch eine manuelle Bedienung oder durch die Bedienung zumindest teilautomatisiert durch ein Fahrerassistenzsystem beschreibt.

Die fahrerprofilspezifischen Maschinenlernmodelle 3 werden initial vom Fahrzeughersteller antrainiert. Hierzu werden vorgegebene Fahrsituationen von verschiedenen Personen mit unterschiedlichem Fahrstil gefahren und dann überprüft, ob für die jeweilige Fahrsituation eine manuelle oder zumindest teilautomatisierte Fahrzeugsteuerung erwünscht ist. Das Maschinenlernmodell 3 umfasst insbesondere ein künstliches neuronales Netz, wodurch durch den Lernvorgang die einzelnen Neuronen des künstlichen neuronalen Netzes entsprechende Verknüpfungen eingehen, sodass ein jeweils zum Fahrstil und der Fahrsituation passender prädiktiver Indikationswert IND-PRÄ ermittelt werden kann.

Der prädiktive Indikationswert IND-PRÄ wird anschließend vom Empfehlungsmodul 2.3 eingelesen und mit einem Indikationsschwellwert IND-SW verglichen. Beispielsweise kann der Wertebereich des prädiktiven Indikationswerts IND-PRÄ von -1 bis 1 reichen und der Indikationsschwellwert IND-SW 0 betragen. Liegt dann der prädiktive Indikationswert IND-PRÄ in einem ersten Bereich gegenüber dem Indikationsschwellwert IND-SW, beispielsweise im Bereich zwischen 0 und 1, so wird im Fahrzeug 1 eine Empfehlung zur Übernahme einer manuellen Fahrzeugsteuerung ausgegeben. Liegt der prädiktive Indikationswert IND-PRÄ hingegen in einem zweiten Bereich gegenüber dem Indikationsschwellwert IND-SW, beispielsweise zwischen -1 und 0, so wird im Fahrzeug 1 eine Empfehlung zur Übernahme einer zumindest teilautomatisierten Fahrzeugsteuerung durch ein Fahrerassistenzsystem ausgegeben. Weisen prädiktiver Indikationswert IND-PRÄ und Indikationsschwellwert IND-SW den gleichen Wert auf, so kann beispielsweise auch das Ausgeben einer Empfehlung zur Fahrzeugsteuerungsübernahme ausbleiben oder eine voreingestellte Standardempfehlung ausgegeben werden.

Figur 2 zeigt noch einmal eine genauere Darstellung der Informationsübertragungspfade der vom Maschinenlernmodell 3 eingelesenen und ausgegebenen Größen.

Die im Fahrzeug 1 ausgegebene Empfehlung kann haptisch, akustisch und/oder visuell ausgegeben werden. Eine Ausgabe erfolgt auf einer entsprechenden Ausgabeeinrichtung 6. Hierbei kann es sich beispielsweise um einen Aktor, einen Lautsprecher oder eine Anzeigevorrichtung handeln.

Mit Hilfe des Fahrerüberwachungsmoduls 2.4 lässt sich ein aktuelles Steuerungsverhalten D-SV-AKT der fahrzeugführenden Person 4 und/oder ein aktueller Fahrerzustand D-ZUS-AKT ermitteln. Ein entsprechend angelerntes Maschinenlernmodell 3 kann auch in das Fahrerüberwachungsmodul 2.4 integriert sein, welches aus dem aktuellen Steuerungsverhalten D-SV-AKT und/oder dem aktuellen Fahrerzustand D-ZUS-AKT einen aktuellen Indikationswert IND-AKT bestimmt. Diese Größen können vom Prädiktionsmodul 2.2 eingelesen werden, um das dem Fahrerprofil entsprechende Maschinenlernmodell 3 weiter zu trainieren, sodass die Vorhersagegüte zur tatsächlichen Affinität der fahrzeugführenden Person 4 verbessert wird. Zusätzlich oder alternativ kann ein Steuergerät 7 das Umsetzungsverhalten der fahrzeugführenden Person 4, sprich also ob die fahrzeugführende Person 4 der vom Empfehlungssystem 2 ausgegebenen Empfehlung gefolgt ist, ermitteln und als Feedback an das Prädiktionsmodul 2.2 übertragen. Auch diese Information kann das Prädiktionsmodul 2.2 nutzen, um das entsprechende Maschinenlernmodell 3 weiter zu trainieren.

Ferner in einer alternativen Weiterbildung ist das Fahrerüberwachungsmodul 2.4 dazu in der Lage, durch das Erfassen des aktuellen Steuerungsverhaltens D-SV-AKT und/oder des aktuellen Fahrerzustands D-ZUS-AKT das Fahrverhalten der fahrzeugführenden Person 4 zu analysieren und hierdurch eine Erst- oder Neuzuordnung der fahrzeugführenden Person 4 zu einem entsprechenden Fahrerprofil durchzuführen. So kann zwar die fahrzeugführende Person 4 abschätzen, welches Fahrerprofil für sie wohl am besten zutreffend ist, das Fahrerüberwachungsmodul 2.4 kann jedoch diese Abschätzung überprüfen und somit ein noch besser für das tatsächliche Fahrverhalten der fahrzeugführenden Person 4 zutreffendes Fahrerprofil auswählen. Durch das beständige Weitertrainieren und personalisiert Abspeicherung des Maschinenlernmodells 3 wird das entsprechende Fahrerprofil der fahrzeugführenden Person 4 noch zutreffender auf diese zugeschnitten und angepasst. Da dies auch für sämtliche Fahrzeuge 1 einer Fahrzeugflotte durchgeführt wird, lassen sich eine Vielzahl besonders realitätsnaher Fahrerprofile definieren und an die einzelnen Fahrzeuge 1 der Fahrzeugflotte verteilen. Hierdurch wird nach und nach die Vorhersagegüte der entsprechenden den verschiedenen Fahrerprofilen zugeordneten Maschinenlernmodelle 3 verbessert, sodass mit einer sehr hohen Wahrscheinlichkeit die in den Fahrzeugen 1 ausgegebenen Empfehlungen auch tatsächlich so von den jeweiligen fahrzeugführenden Personen 4 umgesetzt werden.

## Patentansprüche

1. Fahrzeug (1) mit einem zumindest teilautomatisierten Betriebsmodus, mit einem Empfehlungssystem (2) umfassend ein Datenerhebungsmodul (2.1), ein Prädiktionsmodul (2.2) und ein Empfehlungsmodul (2.3), wobei das Datenerhebungsmodul (2.1) dazu eingerichtet ist Fahrzeugdaten (D-FZG), Umgebungsdaten (D-UMG) und/oder Umweltdaten (D-UMW) zu erheben;
das Prädiktionsmodul (2.2) dazu eingerichtet ist ein Fahrerprofil aus einer Menge an Fahrerprofilen einzulesen, wobei jedes Fahrerprofil ein individuell für das jeweilige Fahrerprofil angelerntes Maschinenlernmodell (3) oder heuristisches Modell umfasst, welches dazu eingerichtet ist die Fahrzeugdaten (D-FZG), Umgebungsdaten (D-UMG) und/oder Umweltdaten (D-UMW) zumindest für einen vorausliegenden Streckenabschnitt einzulesen und als Ausgangsgröße einen prädiktiven Indikationswert (IND-PRÄ) auszugeben, wobei es sich bei dem prädiktiven Indikationswert (IND-PRÄ) um einen Zahlenwert handelt; und
das Empfehlungsmodul (2.3) dazu eingerichtet ist den prädiktiven Indikationswert (IND-PRÄ) mit einem Indikationsschwellwert (IND-SW) zu vergleichen und im Fahrzeug (1) das Ausgeben einer Empfehlung zur Übernahme einer manuellen Fahrzeugsteuerung durch eine fahrzeugführende Person (4) zu veranlassen, wenn der prädiktive Indikationswert (IND-PRÄ) gegenüber dem Indikationsschwellwert (IND-SW) in einem ersten Bereich liegt und im Fahrzeug (1) das Ausgeben einer Empfehlung zur Übernahme einer zumindest teilautomatisierten Fahrzeugsteuerung durch ein Fahrerassistenzsystem zu veranlassen, wenn der prädiktive Indikationswert (IND-PRÄ) gegenüber dem Indikationsschwellwert (IND-SW) in einem zweiten Bereich liegt,
**dadurch gekennzeichnet, dass**
das Empfehlungsmodul (2.3) ferner dazu eingerichtet ist die Höhe des Indikationsschwellwerts (IND-SW) in Abhängigkeit eines vom Prädiktionsmodul (2.2) eingelesenen Fahrerprofils, der Fahrzeugdaten (D-FZG), Umgebungsdaten (D-UMG) und/oder Umweltdaten (D-UMW) anzupassen.

2. Fahrzeug (1) nach Anspruch 1,
**dadurch gekennzeichnet, dass**
das Empfehlungssystem (2) ferner ein Fahrerüberwachungsmodul (2.4) umfasst, welches dazu eingerichtet ist mit Hilfe wenigstens eines Sensors die fahrzeugführende Person (4) zu überwachen und aus vom Sensor erzeugten Sensordaten ein aktuelles Steuerungsverhalten (D-SV-AKT) und/oder einen aktuellen Fahrerzustand (D-ZUS-AKT) zu ermitteln und die fahrzeugführende Person (4) in Abhängigkeit des ermittelten aktuellen Steuerungsverhaltens (D-SV-AKT) und/oder dem aktuellen Fahrerzustand (D-ZUS-AKT) einem der Fahrerprofile zuzuordnen.

3. Fahrzeug (1) nach Anspruch 2,
**dadurch gekennzeichnet, dass**
das Fahrerüberwachungsmodul (2.4) ferner dazu eingerichtet ist aus dem aktuellen Steuerungsverhalten (D-SV-AKT) und/oder dem aktuellen Fahrerzustand (D-ZUS-AKT) einen aktuellen Indikationswert (IND-AKT) zu bestimmen und das Prädiktionsmodul (2.2) ferner dazu eingerichtet ist das aktuelle Steuerungsverhalten (D-SV-AKT), den aktuellen Fahrerzustand (D-ZUS-AKT) und/oder den aktuellen Indikationswert (IND-AKT) einzulesen und hiermit das Maschinenlernmodell (3) und/oder das heuristisches Verfahren o.ä. weiter zu optimieren

4. Fahrzeug (1) nach einem der Ansprüche 1 bis 3,
**dadurch gekennzeichnet, dass**
das Prädiktionsmodul (2.2) ferner dazu eingerichtet ist das Maschinenlernmodell (3) und/oder das heuristisches Modell unter Berücksichtigung einer tatsächlichen Umsetzung der von dem Empfehlungsmodul (2.3) getroffenen Empfehlung zur Übernahme der Fahrzeugsteuerung weiter zu trainieren.

5. Fahrzeug (1) nach einem der Ansprüche 1 bis 4,
**dadurch gekennzeichnet, dass**
das Empfehlungssystem (2) dazu eingerichtet ist Flottendaten (D-FLO) zu empfangen, wobei die Flottendaten (D-FLO) eine aggregierte Menge an nutzerindividuellem Steuerungsverhalten und/oder Fahrerzustände von Nutzern einer Vielzahl an Flottenfahrzeugen umfassen, und
aus den Flottendaten (D-FLO) Fahrerprofile abzuleiten und/oder ein bestehendes Fahrerprofil zu aktualisieren, wobei sich innerhalb festgelegter Grenzen ähnelndes Steuerungsverhalten und/oder Fahrerzustände demselben Fahrerprofil zugeordnet wird.

6. Fahrzeug (1) nach Anspruch 5,
**dadurch gekennzeichnet, dass**
die Flottendaten (D-FLO) ferner das Umsetzungsverhalten der von den Empfehlungsmodulen (2.3) der Flottenfahrzeuge getroffenen Empfehlungen durch die Nutzer der Flottenfahrzeuge umfassen und das Prädiktionsmodul (2.2) ferner dazu eingerichtet ist das Maschinenlernmodell (3) und/oder das heuristisches Modell unter Berücksichtigung des Umsetzungsverhaltens der Nutzer des der fahrzeugführenden Person (4) zugeordneten Fahrerprofils weiter zu optimieren.

7. Fahrzeug (1) nach einem der Ansprüche 1 bis 6,
**dadurch gekennzeichnet, dass**
das Maschinenlernmodell (3) ein neuronales Netz umfasst und/oder auf Basis heuristischer Funktionen initial belegt wurde.

8. Fahrzeug (1) nach einem der Ansprüche 1 bis 7,
**dadurch gekennzeichnet, dass**
ein Fahrzeugsteuergerät (5) dazu eingerichtet ist die vom Empfehlungssystem (2) getroffenen Empfehlung zur Übernahme der Fahrzeugsteuerung durch die fahrzeugführende Person (4) oder das Fahrerassistenzsystem automatisch umzusetzen.

9. Verfahren zur Ausgabe von Empfehlungen an eine fahrzeugführende Person (4) eines Fahrzeugs (1) nach einem der Ansprüche 1 bis 9 zur Übernahme einer manuellen Fahrzeugsteuerung durch die fahrzeugführende Person (4) oder zur Übernahme einer zumindest teilautomatisierten Fahrzeugsteuerung durch ein Fahrerassistenzsystem, umfassend die Schritte:
- Erheben von Fahrzeugdaten (D-FZG), Umgebungsdaten (D-UMG) und/oder Umweltdaten (D-UMW) durch ein Datenerhebungsmodul (2.1);
- Einlesen eines Fahrerprofil aus einer Menge an Fahrerprofilen durch ein Prädiktionsmodul (2.2), wobei jedes Fahrerprofil ein individuell für das jeweilige Fahrerprofil angelerntes Maschinenlernmodell (3) oder heuristisches Modell umfasst, welches dazu eingerichtet ist die Fahrzeugdaten (D-FZG), Umgebungsdaten (D-UMG) und/oder Umweltdaten (D-UMW) zumindest für einen vorausliegenden Streckenabschnitt einzulesen und als Ausgangsgröße einen prädiktiven Indikationswert (IND-PRÄ) auszugeben, wobei es sich bei dem prädiktiven Indikationswert (IND-PRÄ) um einen Zahlenwert handelt;
- Bestimmen des prädiktiven Indikationswerts (IND-PRÄ) für den vorausliegenden Streckenabschnitt durch das Prädiktionsmodul (2.2); und
- Vergleichen des prädiktiven Indikationswerts (IND-PRÄ) mit einem Indikationsschwellwert (IND-SW) und Veranlassen der Ausgabe einer Empfehlung zur Übernahme einer manuellen Fahrzeugsteuerung durch die fahrzeugführende Person (4) im Fahrzeug (1), wenn der prädiktive Indikationswert (IND-PRÄ) gegenüber dem Indikationsschwellwert (IND-SW) in einem ersten Bereich liegt und Veranlassen der Ausgabe einer Empfehlung zur Übernahme einer zumindest teilautomatisierten Fahrzeugsteuerung durch ein Fahrerassistenzsystem im Fahrzeug (1), wenn der prädiktive Indikationswert (IND-PRÄ) gegenüber dem Indikationsschwellwert (IND-SW) in einem zweiten Bereich liegt, durch ein Empfehlungsmodul (2.3),
**dadurch gekennzeichnet, dass**
das Empfehlungsmodul (2.3) ferner dazu eingerichtet ist die Höhe des Indikationsschwellwerts (IND-SW) in Abhängigkeit eines vom Prädiktionsmodul (2.2) eingelesenen Fahrerprofils, der Fahrzeugdaten (D-FZG), Umgebungsdaten (D-UMG) und/oder Umweltdaten (D-UMW) anzupassen.

## Claims

1. Vehicle (1) having an at least partly automated operating mode and having a recommendation system (2) comprising a data collection module (2.1), a prediction module (2.2) and a recommendation module (2.3),
the data collection module (2.1) being configured to collect vehicle data (D-FZG), surroundings data (D-UMG) and/or environment data (D-UMW);
the prediction module (2.2) being configured to read in a driver profile from a set of driver profiles, each driver profile comprising a machine learning model (3) or heuristic model, which is trained individually for each driver profile and is configured to read in the vehicle data (D-FZG), surroundings data (D-UMG) and/or environment data (D-UMW) at least for a route portion ahead and to output a predictive indication value (IND-PRÄ) as an output variable, the predictive indication value (IND-PRÄ) being a numerical value; and
the recommendation module (2.3) being configured to compare the predictive indication value (IND-PRÄ) with an indication threshold value (IND-SW) and to cause a recommendation to be output in the vehicle (1) for a person (4) driving the vehicle to take over manual vehicle control if the predictive indication value (IND-PRÄ) is in a first range compared with the indication threshold value (IND-SW) and to cause a recommendation to be output in the vehicle (1) for a driver assistance system to take over at least partly automated vehicle control if the predictive indication value (IND-PRÄ) is in a second range compared with the indication threshold value (IND-SW),
**characterized in that**
the recommendation module (2.3) is further configured to adapt the level of the indication threshold value (IND-SW) depending on a driver profile read in by the prediction module (2.2), the vehicle data (D-FZG), the surroundings data (D-UMG) and/or the environmental data (D-UMW).

2. Vehicle (1) according to claim 1,
**characterized in that**
the recommendation system (2) further comprises a driver monitoring module (2.4) which is configured to monitor the person (4) driving the vehicle using at least one sensor and to identify a current control behavior (D-SV-AKT) and/or a current driver state (D-ZUS-AKT) from sensor data generated by the sensor and to assign the person (4) driving the vehicle to one of the driver profiles depending on the identified current control behavior (D-SV-AKT) and/or the current driver state (D-ZUS-AKT).

3. Vehicle (1) according to claim 2,
**characterized in that**
the driver monitoring module (2.4) is further configured to determine a current indication value (IND-AKT) from the current control behavior (D-SV-AKT) and/or the current driver state (D-ZUS-AKT) and the prediction module (2.2) is further configured to read in the current control behavior (D-SV-AKT), the current driver state (D-ZUS-AKT) and/or the current indication value (IND-AKT) and thereby further optimize the machine learning model (3) and/or the heuristic method or similar.

4. Vehicle (1) according to any of claims 1 to 3,
**characterized in that**
the prediction module (2.2) is further configured to further train the machine learning model (3) and/or the heuristic model taking into account an actual implementation of the recommendation made by the recommendation module (2.3) to take over vehicle control.

5. Vehicle (1) according to any of claims 1 to 4,
**characterized in that**
the recommendation system (2) is configured to receive fleet data (D-FLO), the fleet data (D-FLO) comprising an aggregated set of user-individual control behavior and/or driver states of users of a plurality of fleet vehicles, and
to derive driver profiles from the fleet data (D-FLO) and/or to update an existing driver profile, similar control behavior and/or driver states being assigned to the same driver profile within defined limits.

6. Vehicle (1) according to claim 5,
**characterized in that**
the fleet data (D-FLO) further comprise the implementation behavior of the recommendations made by the recommendation modules (2.3) of the fleet vehicles by the users of the fleet vehicles and the prediction module (2.2) is further configured to further optimize the machine learning model (3) and/or the heuristic model taking into account the implementation behavior of the users of the driver profile assigned to the person (4) driving the vehicle.

7. Vehicle (1) according to any of claims 1 to 6,
**characterized in that**
the machine learning model (3) comprises a neural network and/or was initially verified on the basis of heuristic functions.

8. Vehicle (1) according to any of claims 1 to 7,
**characterized in that**
a vehicle control unit (5) is configured to automatically implement the recommendation made by the recommendation system (2) for the person (4) driving the vehicle or the driver assistance system to take over vehicle control.

9. Method for outputting recommendations to a person (4) driving a vehicle in a vehicle (1) according to any of claims 1 to 9 for the person (4) driving the vehicle to take over manual vehicle control or for a driver assistance system to take over at least partly automated vehicle control, comprising the steps of:
- collecting vehicle data (D-FZG), surroundings data (D-UMG) and/or environment data (D-UMW) by means of a data collection module (2.1);
- reading in a driver profile from a set of driver profiles by means of a prediction module (2.2), each driver profile comprising a machine learning model (3) or heuristic model, which is trained individually for each driver profile and is configured to read in the vehicle data (D-FZG), surroundings data (D-UMG) and/or environment data (D-UMW) at least for a route portion ahead and to output a predictive indication value (IND-PRÄ) as an output variable, the predictive indication value (IND-PRÄ) being a numerical value;
- determining the predictive indication value (IND-PRÄ) for the route portion ahead by means of the prediction module (2.2); and
- comparing the predictive indication value (IND-PRÄ) with an indication threshold value (IND-SW) and causing a recommendation to be output in the vehicle (1) for the person (4) driving the vehicle to take over manual vehicle control if the predictive indication value (IND-PRÄ) is in a first range compared with the indication threshold value (IND-SW) and causing a recommendation to be output in the vehicle (1) for a driver assistance system to take over at least partly automated vehicle control if the predictive indication value (IND-PRÄ) is in a second range compared with the indication threshold value (IND-SW) by means of a recommendation module (2.3),
**characterized in that**
the recommendation module (2.3) is further configured to adapt the level of the indication threshold value (IND-SW) depending on a driver profile read in by the prediction module (2.2), the vehicle data (D-FZG), the surroundings data (D-UMG) and/or the environmental data (D-UMW).

## Revendications

1. Véhicule (1) comportant un mode de fonctionnement au moins partiellement automatisé, comportant un système de recommandation (2) comprenant un module de collecte de données (2.1), un module de prédiction (2.2) et un module de recommandation (2.3), dans lequel
le module de collecte de données (2.1) est conçu pour collecter des données de véhicule (D-FZG), des données d'alentours (D-UMG) et/ou des données d'alentours (D-UMW) ;
le module de prédiction (2.2) est conçu pour lire un profil de conducteur parmi un ensemble de profils de conducteur, dans lequel chaque profil de conducteur comprend un modèle d'apprentissage machine (3) ou un modèle heuristique appris individuellement pour le profil de conducteur respectif, lequel est conçu pour lire les données de véhicule (D-FZG), les données d'alentours (D-UMG) et/ou les données d'environnement (D-UMW) au moins pour un tronçon de trajet précédent et émettre comme grandeur de sortie une valeur d'indication prédictive (IND-PRÂ), dans lequel la valeur d'indication prédictive (IND-PRÄ) est une valeur numérique ; et
le module de recommandation (2.3) est conçu pour comparer la valeur d'indication prédictive (IND-PRÄ) à une valeur seuil d'indication (IND-SW) et pour provoquer dans le véhicule (1) l'émission d'une recommandation pour la prise en charge d'une commande manuelle de véhicule par une personne (4) conduisant le véhicule, lorsque la valeur d'indication prédictive (IND-PRÄ) se situe dans une première plage par rapport à la valeur seuil d'indication (IND-SW) et pour provoquer dans le véhicule (1) l'émission d'une recommandation pour la prise en charge d'une commande de véhicule au moins partiellement automatisée par un système d'assistance au conducteur, lorsque la valeur d'indication prédictive (IND-PRÄ) se situe dans une seconde plage par rapport à la valeur seuil d'indication (IND-SW),
**caractérisé en ce que**
le module de recommandation (2.3) est en outre conçu pour adapter la valeur seuil d'indication (IND-SW) en fonction d'un profil de conducteur lu par le module de prédiction (2.2), des données de véhicule (D-FZG), des données d'alentours (D-UMG) et/ou des données d'environnement (D-UMW).

2. Véhicule (1) selon la revendication 1,
**caractérisé en ce que**
le système de recommandation (2) comprend en outre un module de surveillance du conducteur (2.4) qui est conçu pour surveiller la personne (4) conduisant le véhicule à l'aide d'au moins un capteur et pour déterminer un comportement de commande actuel (D-SV-AKT) et/ou un état actuel du conducteur (D-ZUS-AKT) à partir de données de capteur générées par le capteur et pour affecter la personne (4) conduisant le véhicule à l'un des profils de conducteur en fonction du comportement de commande actuel (D-SV-AKT) et/ou de l'état actuel du conducteur (D-ZUS-AKT) déterminés.

3. Véhicule (1) selon la revendication 2,
**caractérisé en ce que**
le module de surveillance du conducteur (2.4) est en outre conçu pour déterminer une valeur d'indication actuelle (IND-AKT) à partir du comportement de commande actuel (D-SV-AKT) et/ou de l'état actuel du conducteur (D-ZUS-AKT) et le module de prédiction (2.2) est en outre conçu pour lire le comportement de commande actuel (D-SV-AKT), l'état actuel du conducteur (D-ZUS-AKT) et/ou la valeur d'indication actuelle (IND-AKT) et pour ainsi optimiser davantage le modèle d'apprentissage machine (3) et/ou le procédé heuristique ou similaire.

4. Véhicule (1) selon l'une des revendications 1 à 3,
**caractérisé en ce que**
le module de prédiction (2.2) est en outre conçu pour continuer à entraîner le modèle d'apprentissage machine (3) et/ou le modèle heuristique en tenant compte d'une mise en oeuvre effective de la recommandation faite par le module de recommandation (2.3) pour la prise en charge de la commande de véhicule.

5. Véhicule (1) selon l'une des revendications 1 à 4,
**caractérisé en ce que**
le système de recommandation (2) est conçu pour recevoir des données de flotte (D-FLO), dans lequel les données de flotte (D-FLO) comprennent une quantité agrégée de comportements de commande et/ou d'états de conduite individuels à l'utilisateur d'utilisateurs d'une pluralité de véhicules de flotte, et
de déduire des profils de conducteur à partir des données de flotte (D-FLO) et/ou d'actualiser un profil de conducteur existant, dans lequel des comportements de commande et/ou des états de conducteur similaires dans des limites fixées sont attribués au même profil de conducteur.

6. Véhicule (1) selon la revendication 5,
**caractérisé en ce que**
les données de flotte (D-FLO) comprennent en outre le comportement de mise en oeuvre des recommandations faites par les modules de recommandation (2.3) des véhicules de flotte par les utilisateurs des véhicules de flotte et le module de prédiction (2.2) est en outre conçu pour optimiser davantage le modèle d'apprentissage machine (3) et/ou le modèle heuristique en tenant compte du comportement de mise en oeuvre des utilisateurs du profil de conducteur associé à la personne (4) conduisant le véhicule.

7. Véhicule (1) selon l'une des revendications 1 à 6,
**caractérisé en ce que**
le modèle d'apprentissage machine (3) comprend un réseau neuronal et/ou a été initialement rempli sur la base de fonctions heuristiques.

8. Véhicule (1) selon l'une des revendications 1 à 7,
**caractérisé en ce**
**qu'**un appareil de commande de véhicule (5) est conçu pour mettre en oeuvre automatiquement la recommandation faite par le système de recommandation (2) pour la prise en charge de la commande de véhicule par la personne (4) conduisant le véhicule ou le système d'assistance au conducteur.

9. Procédé pour l'émission de recommandations à une personne (4) conduisant un véhicule (1) selon l'une des revendications 1 à 9 pour la prise en charge d'une commande manuelle du véhicule par la personne (4) conduisant le véhicule ou pour la prise en charge d'une commande au moins partiellement automatisée du véhicule par un système d'assistance au conducteur, comprenant les étapes consistant à :
- la collecte de données de véhicule (D-FZG), de données d'alentours (D-UMG) et/ou de données d'environnement (D-UMW) par un module de collecte de données (2.1) ;
- la lecture d'un profil de conducteur parmi un ensemble de profils de conducteur par un module de prédiction (2.2), dans lequel chaque profil de conducteur comprend un modèle d'apprentissage machine (3) ou un modèle heuristique appris individuellement pour le profil de conducteur respectif, lequel est conçu pour lire les données de véhicule (D-FZG), les données d'alentours (D-UMG) et/ou les données d'environnement (D-UMW) au moins pour un tronçon de trajet précédent et pour émettre comme grandeur de sortie une valeur d'indication prédictive (IND-PRÂ), dans lequel la valeur d'indication prédictive (IND-PRÄ) est une valeur numérique ;
- la détermination de la valeur d'indication prédictive (IND-PRÄ) pour le tronçon de route précédent par le module de prédiction (2.2) ; et
- la comparaison de la valeur d'indication prédictive (IND-PRÄ) à une valeur seuil d'indication (IND-SW) et provocation de l'émission d'une recommandation pour la prise en charge d'une commande manuelle de véhicule par la personne (4) conduisant le véhicule dans le véhicule (1), lorsque la valeur d'indication prédictive (IND-PRÄ) se situe dans une première plage par rapport à la valeur seuil d'indication (IND-SW) et provocation de l'émission d'une recommandation pour la prise en charge d'une commande de véhicule au moins partiellement automatisée par un système d'assistance au conducteur dans le véhicule (1), lorsque la valeur d'indication prédictive (IND-PRÄ) se situe dans une seconde plage par rapport à la valeur seuil d'indication (IND-SW), par un module de recommandation (2.3),
**caractérisé en ce que**
le module de recommandation (2.3) est en outre conçu pour adapter la valeur seuil d'indication (IND-SW) en fonction d'un profil de conducteur lu par le module de prédiction (2.2), des données de véhicule (D-FZG), des données d'alentours (D-UMG) et/ou des données d'environnement (D-UMW).
